# EUROPÄISCHE PATENTSCHRIFT

(11) **EP 1 269 032 B1**
(45) Veröffentlichungstag und Bekanntmachung des Hinweises auf die Patenterteilung: **22.09.2004**
(21) Anmeldenummer: 01907559.7
(22) Anmeldetag: 24.02.2001
(51) Int. Cl.: F16B 37/04, F16B 37/00, A47K 13/26

(54) **BEFESTIGUNGSELEMENT**
FASTENING ELEMENT
ELEMENT DE FIXATION

(30) Priorität: 23.03.2000 DE 10014180
(43) Veröffentlichungstag der Anmeldung: 02.01.2003
(73) Patentinhaber: Eureha GmbH, 88131 Lindau (DE)
(72) Erfinder: RIMPL, Stephan, 88281 Schlier (DE)
(74) Vertreter: Weiss, Peter, Dr.
(86) Internationale Anmeldenummer: PCT/EP2001/002108
(87) Internationale Veröffentlichungsnummer: WO 2001/071203

(56) Entgegenhaltungen:
- EP-A- 0 962 666
- GB-A- 1 536 998
- US-A- 3 739 684
- US-A- 5 106 225

## Beschreibung

Die Erfindung betrifft ein Befestigungselement zum Aufschrauben auf ein Gewinde mit einem Innengewinde, wobei der Durchmesser des Innengewindes veränderbar und ein gewünschter Durchmesser festlegbar ist.

Üblicherweise werden Gegenstände oder Fügeteile durch Schrauben miteinander verbunden oder an anderen Gegenständen, Wänden od. dgl. festgelegt. Dabei wird meist der Schraubenbolzen mit seinem Gewindeschaft durch eine Bohrung gesteckt und anderenends auf den Gewindeschaft einer Mutter aufgeschraubt. Dieser Arbeitsschritt braucht sehr viel Zeit, da die Mutter immer erst einen Teil des Gewindeschaftes ablaufen muss, bis sie auf den Gegenstand bzw. das Fügeteil od. dgl. auftrifft. Erst dann erfolgt das eigentliche Festschrauben der Mutter.

Nur beispielhaft wird auf das Festlegen eines Klodeckels oder Sitzerhöhung an einer Kloschüssel verwiesen. Zwei Gewindeschäfte, die an dem Klodeckel oder einer Sitzerhöhung fest liegen, werden durch entsprechende Bohrungen in den Kloschüsselrand gesteckt und von der anderen Seite durch Flügelschrauben befestigt. Diese Arbeit ist sehr zeitaufwendig und zudem findet sie an einer sehr schwer zugänglichen Stelle statt.

Die GB 1 536 998 beschreibt ein Befestigungselement zum Aufschrauben auf ein Gewinde mit einem Innengewinde, wobei im Bereich des flexibel ausgebildeten Gewindes zum Aufschrauben ein Gegenhalter erforderlich ist. Nachteilig an einem derartigen Gegenhalter ist, dass dieser aufwendig festzuhalten ist und einen Durchmesser des Gewindes, auf welches das Befestigungselement aufgeschraubt werden kann, beschränkt ist.

Der vorliegenden Erfindung liegt die Aufgabe zugrunde, ein Befestigungselement der o.g. Art zu schaffen, mit welchem eine Verschraubung sehr schnell und einfach hergestellt werden kann.

Zur Lösung dieser Aufgabe führt, dass das Innengewinde in eine Innenbohrung einer Hülse eingestochen ist und die Hülse einen Schaft aufweist, der mit zumindest einem Längsschlitz versehen ist, wobei auf die Hülse ein axial verschiebbares Griffstück aufgesetzt und darauf axial bewegbar gehalten ist, welches eine Breite des Längsschlitzes und damit den Durchmesser des Innengewindes verringert.

Grundgedanke der vorliegenden Erfindung ist, dass bei vergrösserten oder verkleinertem Durchmesser des jeweiligen Gewindes eine Achsialbewegung der beiden zu verbindenden Teile relativ zueinander stattfinden kann, während die Gewinde erst am Ende dieser Relativbewegung miteinander in Eingriff kommen und erst dann durch eine zusätzliche Drehbewegung ein Festlegen erfolgt.

Ein derartiges Befestigungselement ist zwar für den Sanitärbereich entwickelt worden, soll aber als grundsätzliche Montagehilfe Anwendung finden. Es kann überall dort gebraucht werden, wo zwei Teile mit jeweils einem Aussen- und einem Innengewinde miteinander verbunden werden sollen. Dabei ist es gleichgültig, ob das eigentliche erfindungsgemässe Befestigungselement festliegt und das andere Teil, bspw. ein Schraubenbolzen gegenüber dem Befestigungselement bewegt wird, oder umgekehrt. Im Rahmen der Erfindung liegt sowohl, dass das Befestigungselement ein Innengewinde aufweist, welches auf ein Aussengewinde aufgeschraubt wird, als dass das Befestigungselement eine Aussengewinde aufweist, welches in ein Innengewinde eingesetzt wird. Denkbar sind alle Möglichkeiten und sollen von der Erfindung umfasst sein. Im Falle eines Aussengewindes am Befestigungselement muss dieses spreizbar sein, damit es mit einem Innengewinde in Eingriff kommen kann.

In einem bevorzugten Ausführungsbeispiel ist ein Innengewinde in eine Innenbohrung einer Hülse eingestochen. Diese Hülse weist einen Schaft auf, der mit zumindest einem Längsschlitz versehen ist. Dieser Längsschlitz gewährleistet, dass bei seiner Vergrösserung oder Verkleinerung der Durchmesser des Gewindes geändert wird.

Ein Festlegen des Durchmessers und damit ein Einpressen des Innengewindes in ein Aussengewinde bspw. eines Gewindeschaftes wird durch ein Griffstück bewirkt, welches auf die Hülse aufgeschoben wird, wobei Druckelemente in dem Griffstück vorhanden sind, welche einen Druck auf die Hülse ausüben, sodass sich die Schlitzbreite verkleinert.

In einem bevorzugten Ausführungsbeispiel der Erfindung soll auf dem Schaft der Hülse zumindest ein teilweise parallel zu dem Längsschlitz und axial verlaufender Keil aufgesetzt sein, der in eine entsprechend geformte Nut in einer Innenfläche des Griffstückes einfährt. In der Regel dürften mehrere derartige Keile und Nuten vorgesehen sein, die miteinander in Eingriff kommen. Das Zusammenspiel von Nuten und Keilen bewirkt wiederum, dass zwischen Hülse und Griffstück eine Verdrehsicherheit hergestellt wird, sodass beim Drehen des Griffstückes auch die Hülse mitgenommen wird.

Solange kein Druck auf die Hülse ausgeübt wird, sind die durch den Schlitz getrennten Teile der Hülse radial aufweitbar. Damit ein geeignetes Aufweiten möglich ist, sind bevorzugt mehrere Längsschlitze vorgesehen, welche so an der Hülse Spannbacken ausbilden. Die Hülse kann damit auf den Gewindeschaft aufgeschoben werden, ohne dass eine Drehung der Hülse stattfinden muss. Erst wenn die Hülse an einen Gegenstand anschlägt, werden die Keile tiefer in die Nuten in dem Griffstück eingefahren, wodurch ein Druck auf die Spannbacken erfolgt. Dieser Druck wird noch dadurch erhöht, dass zwischen den Keilen auf der Hülse, d.h. in den Nuten zwischen den Keilen Steigflächen vorgesehen sind, auf die entsprechende Stege aufgleiten, welche wiederum zwischen sich die Nuten in dem Griffstück ausbilden.

Ist die Hülse gänzlich in das Griffstück eingefahren, wird das Innengewinde in das Aussengewinde eingepresst und das gesamte Befestigungselement kann jetzt gedreht werden. Hierbei kann ein Konus, der dem Schaft angeformt ist, in eine Bohrung eindringen, in welcher auch der Schraubenbolzen sitzt. Dadurch wird das Zusammenpressen der Spannbacken zusätzlich unterstützt und gleichzeitig das Befestigungselement mit dem Schraubenbolzen zentriert. Das Eindrehen geschieht bevorzugt so lange, bis ein Ringbund zwischen Konus und Keilbereich an einer Wand anschlägt. Bevorzugt sind auch Keilende und das Ende der Nuten in dem Griffstück abgeflacht ausgebildet, sodass auch hierdurch ein radialer Druck auf die Spannbacken ausgeübt werden kann.

Damit eine axiale Bewegung von Hülse gegenüber Griffstück möglich ist, aber gleichzeitig die Hülse nicht aus dem Griffstück herausfällt, ist an dem Schaft der Hülse ein Bund vorgesehen. Zur Vormontage von Hülse und Griffstück gleitet eine entsprechende Anphasung an dem Bund im Inneren des Griffstückes einer schrägen Wand auf, überfährt einen Ringkragen und schnappt in eine Ringnut ein. In dieser Ringnut wirkt der Bund der Hülse mit einer etwa senkrecht in Hülsenachse verlaufenden Wand und einer ebenso senkrecht zur Griffstückachse verlaufenden Wand zusammen, sodass die Kombination aus Hülse und Griffstück erst durch ein radiales Aufspreizen des hinteren Teils des Griffstückes erfolgen kann, was nur gewollt geschehen kann.

Damit überhaupt der Bund in die Ringnut einfahren kann, muss auch der hintere Bereich des Griffstückes spreizbar ausgebildet sein. Zu diesem Zweck sind wiederum entsprechende Schlitze in das Griffstück eingeformt.

Wird die Hülse, bzw. wie oben erwähnt, die Keile tiefer in das Griffstück eingefahren, damit ein radialer Druck auf die Spannbacken ausgeübt wird, gleitet der Bund wiederum an einer schrägen Wand der Ringnut auf. Die Spreizbacken spreizen sich wieder und der Bund tritt aus dem hinteren Ende des Griffstückes aus und liegt dort einer zur Innenbohrung hingerichteten Phase an. Diese nach innen gerichtete Phase des Griffstückes hat den Vorteil, das zur Demontage nach einer Art Drehung des Befestigungselementes lediglich axial an dem Griffstück gezogen werden muss, damit der Bund wieder an dieser endwärtigen Phase des Griffstückes entlang gleiten kann, die Spreizbacken öffnet und wieder in die Ringnut einschnappt. Ein weiteres Herausziehen der Hülse aus dem Griffstück wird durch die senkrechten Wände von Ringnut und Bund vermieden.

Durch die vorliegende Erfindung wird ein universelles Montageelement geschaffen, dessen Anwendungsbereich so umfassend ist, dass es den Rahmen der vorliegenden Anmeldung sprengen würde. Das Befestigungselement ist nicht nur das eigentliche Befestigungselement selbst sondern gleichzeitig auch sein eigenes Werkzeug zu seiner eigenen Festlegung. Aus diesem Grunde ist das Griffstück aussen so geformt, dass erhebliche Kraft von einer menschlichen Hand aufgebracht werden kann. Selbstverständlich ist auch denkbar, dass das Griffstück aussen mit zusätzlich Riffelungen od. dgl. versehen wird.

Das Befestigungselement kann aus beliebigem Material sein, bevorzugt aus Kunststoff oder Metall.

Wenn im vorliegenden Fall von Innenbohrung gesprochen wird, so kann es sich dabei selbstverständlich auch um eine innere Ausnehmung handeln, die beim Spritzvorgang oder Giessvorgang selbst hergestellt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf ein erfindungsgemässes Befestigungselement;
Figur 2 eine Draufsicht auf das Befestigungselement gemäss Figur 1 in einer weiteren Gebrauchslage;
Figur 3 einen Längsschnitt durch das Befestigungselement gemäss Figur 1;
Figur 4 einen Längsschnitt durch das Befestigungselement gemäss Figur 2;
Figur 5 eine Rückansicht eines Griffstücks aus dem Befestigungselement gemäss Figur 1;
Figur 6 eine Frontansicht des Griffstücks;
Figur 7 einen Längsschnitt durch das Griffstück gemäss Figur 5 entlang Linie VII-VII;
Figur 8 einen Längsschnitt durch das Griffstück gemäss Figur 5 entlang Linie VIII-VIII;
Figur 9 eine perspektivische Ansicht des Griffstücks;
Figur 10 eine Stirnansicht einer Hülse als weiterer Bestandteil des Befestigungselementes gemäss Figur 1;
Figur 11 einen Längsschnitt durch die Hülse gemäss Figur 10 entlang Linie XI-XI;
Figur 12 eine Draufsicht auf die Hülse gemäss Figur 10;
Figur 13 einen Querschnitt durch die Hülse gemäss Figur 12 entlang Linie XIII-XIII;
Figur 14 einen Querschnitt durch die Hülse gemäss Figur 12 entlang Linie XIV-XIV.

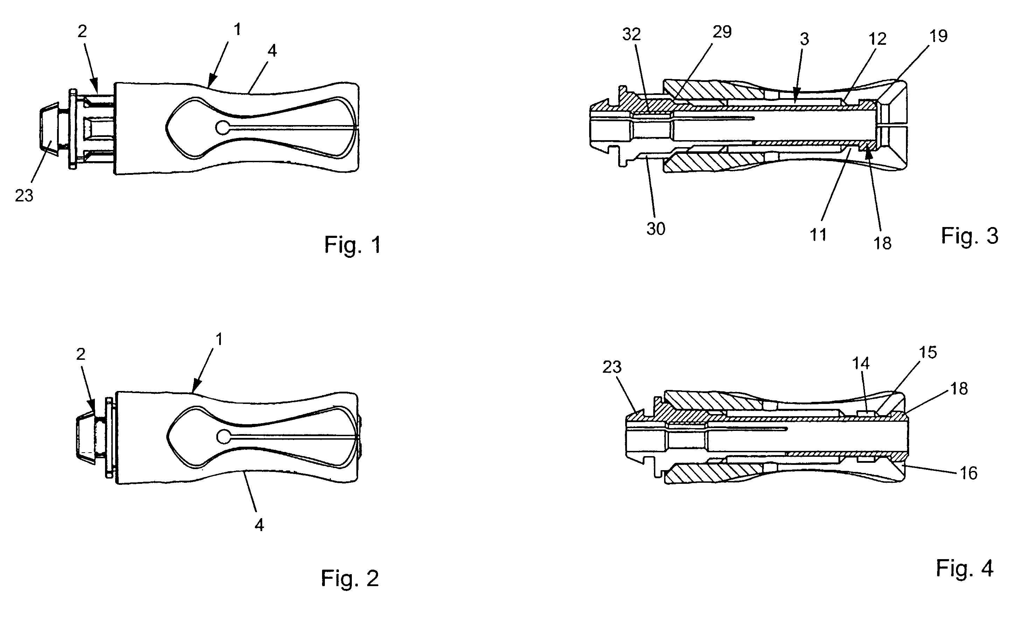

Ein erfindungsgemässes Befestigungselement besteht gemäss den Figuren 1 bis 4 aus einem als Schliesser ausgebildeten Griffstück 1 und einer Hülse 2. Die Hülse 2 ist dabei in Gebrauchslage in eine Innenbohrung 3 des Griffstückes 1 eingesetzt.

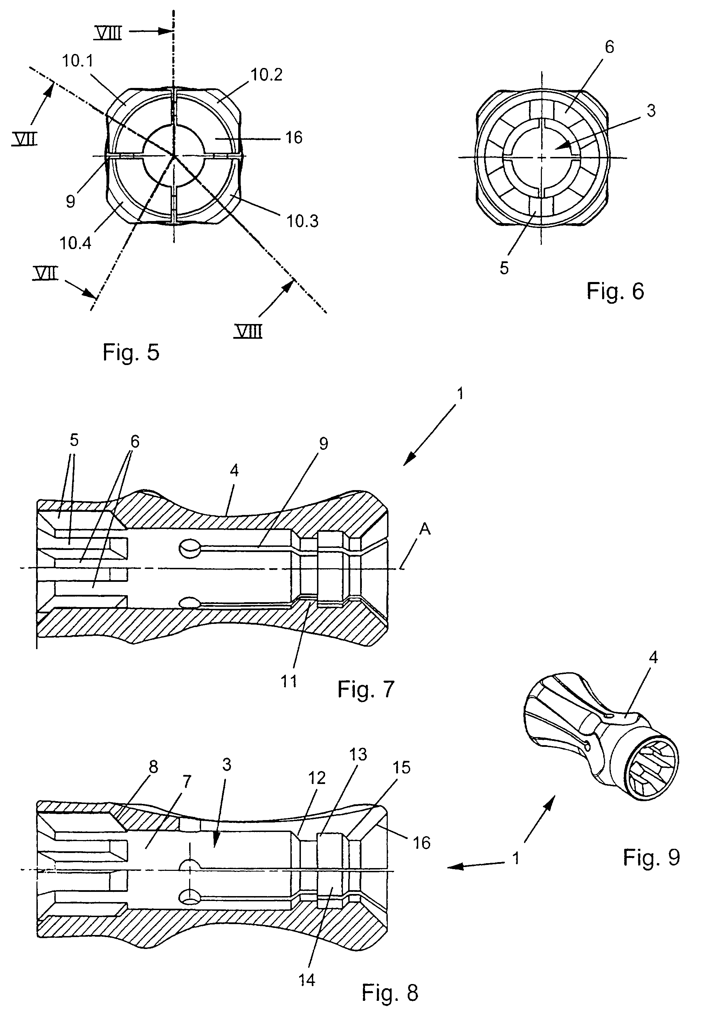

Das Griffstück 1 ist gemäss den Figuren 5 bis 8 hülsenförmig ausgebildet und weist auf seiner Aussenfläche Griffmulden 4 auf.

Einends sind in die Innenbohrung 3 etwa parallel zu einer Längsachse A verlaufende Nuten 5 eingestochen, zwischen denen keilförmige Stege 6 stehenbleiben. Jede Nut besitzt dabei eine zur Innenfläche 7 der Innenbohrung 3 ansteigende Schräge 8.

Nach dem Bereich mit den Nuten 5 und Stegen 6 beginnen ebenfalls axial zur Längsachse A verlaufende Schlitze 9, welche das Griffstück 1 zum einen Ende hin in vier Spreizbacken 10.1 bis 10.4 aufteilt.

Im Bereich dieser Schlitze 9 besitzt die Innenbohrung 3 einen Ringkragen 11, der zum Bereich der Nuten 5/Stege 6 hin eine schräge Wand 12 und zur anderen Seite hin eine etwa senkrecht zur Längsachse A hin verlaufende Wand 13 besitzt. Diese Wand 13 ist gleichzeitig Teil einer Ringnut 14, welche ebenfalls in die Innenbohrung 3 eingestochen ist. Mit der senkrecht verlaufenden Wand 13 bildet wiederum eine schräg verlaufende Wand 15 diese Ringnut 14 aus.

Das Ende des Griffstückes 1 nach der Ringnut 14 besitzt eine grosse Phase 16, die nach innen zur Innenbohrung 3 hin ausgerichtet ist.

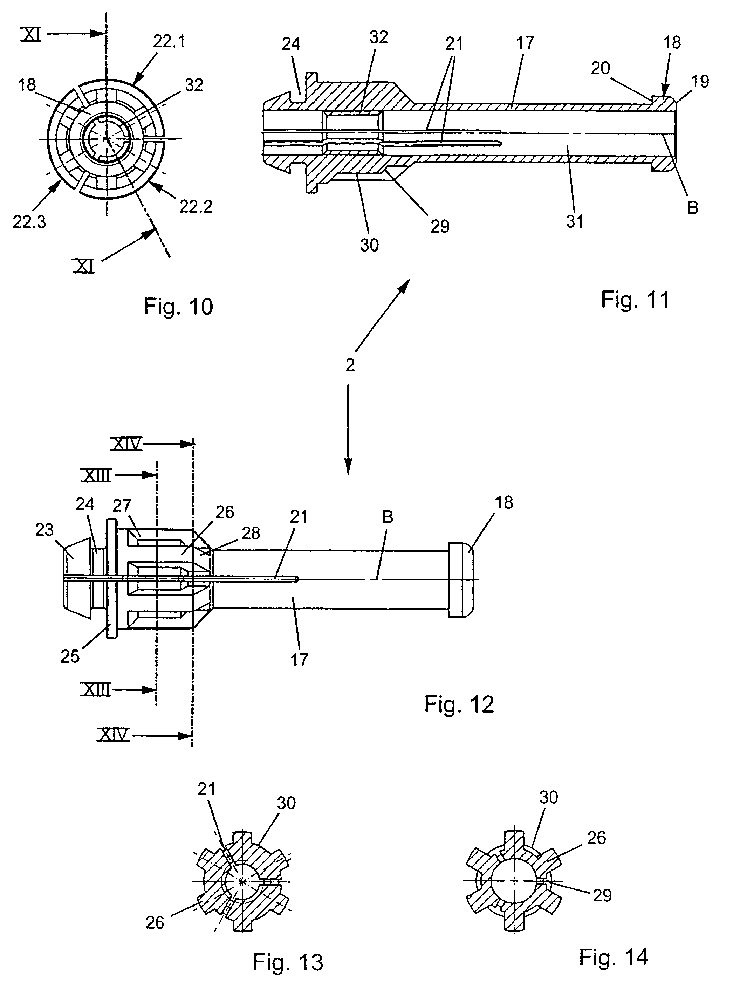

Die Hülse 2 weist gemäss den Figuren 10 bis 14 einen Schaft 17 auf, an dessen einem Ende ein Bund 18 vorgesehen ist. Endwärtig besitzt dieser Bund 18 eine bevorzugt ballig ausgebildete Phase 19, anderenends ein etwa senkrecht zur Hülsenachse B verlaufende Ringwand 20.

Vom anderen Ende her sind in die Hülse 2 Schlitze 21 eingeformt, bevorzugt drei Schlitze, welche in diesem Fall drei Spannbacken 22.1, 22.2 und 22.3 ausbilden. Im Bereich der Schlitze 21 besitzt jede Spannbacke 22.1 bis 22.3 vom Ende her einen ansteigenden Konus 23, daran anschliessend ein Einstich 24 und daran anschliessend einen Bund 25. An dem Bund 25 schliesst wiederum ein Bereich an, der aus etwa parallel zur Hülsenachse B verlaufenden Keilen 26 und Nuten 27 besteht. Jeder Keil besitzt anderenends des Bundes 25 eine Abflachung 28 zum Schaft 17 hin, während durch eine Steigfläche 29 zwischen zwei Keilen 26 im Nutgrund eine Zylinderfläche 30 mit erhöhtem Durchmesser ausgebildet ist. Dies ist insbesondere in den Figuren 13 und 14 erkennbar.

In einer Innenbohrung 31 der Hülse 2 ist im Bereich der Schlitze 21 ein Innengewinde 32 eingestochen.

Die funktionsweise der vorliegenden Erfindung ist folgende: in einem Vormontageschritt wird die Hülse 2 in das Griffstück 1 eingesetzt, wie dies in Figur 1 und 3 gezeigt ist. Beim Einsetzen trifft der Bund 18 zuerst auf die schräge Wand 12 in der Innenbohrung 3, wobei die Aussenphase 19 des Bundes 18 auf der Schräge aufgleitet, sodass sich die Spreizbacken 10.1 bis 10.4 öffnen. Der Bund 18 gleitet so über den Ringkragen 11 und schnappt in die Ringnut 14 ein, wobei ein Herausgleiten der Hülse 2 aus dem Griffstück 1 jetzt dadurch vermieden wird, dass die etwa senkrecht zur Hülsenachse B hin verlaufende Wand 20 des Bundes 18 der etwa senkrecht zur Längsachse A des Griffstückes 1 verlaufenden Wand 13 der Ringnut 14 anliegt.

Ferner korrespondieren in dieser in Figur 3 gezeigten Gebrauchslage die Keile 26 und Stege 6 von Hülse 2 und Griffstück 1 mit den entsprechenden Nuten 5 bzw. 27 des jeweiligen Gegenstückes. Bereits beim Einführen der Hülse 2 in das Griffstück 1 sollte darauf geachtet werden, dass die Keile 26 am Kopf der Hülse 2 zu den Nuten 5 am oberen Ende des Griffstückes 1 ausgerichtet sind.

Bereits im vormontierten Zustand greifen die Keile 26 in die Nuten 5 ein, sodass ein freies Drehen des Griffstücks gegenüber der Hülse 2 nicht mehr möglich ist. Allerdings können in radialer Richtung die Spannbacken 22.1 bis 22.3 bewegt werden.

In diesem vormontierten Zustand erfolgt die Handhabung des erfindungsgemässen Befestigungselementes. Bspw. zum Festlegen eines beliebigen Gegenstandes an einer Schraube, welche bspw. diesen Gegenstand durchdringt, wird das Befestigungselement auf das freie Ende eines Schraubengewindes aufgeschoben. Das Griffstück 1 wird dabei so gehalten, dass sich seine Spreizbacken 10.1 bis 10.4 nicht aufweiten und sich die Lage von Hülse 2 zu Griffstück 1 zueinander nicht ändern kann. Dagegen weiten sich jedoch die Spannbacken 22.1 bis 22.3, sodass das Innengewinde 32 über das Schraubengewinde gleiten kann, ohne dass das Befestigungselement gedreht wird.

Sobald das Befestigungselement an dem Gegenstand anstösst, wird das hintere Ende des Griffstückes freigegeben und weiter Kraft über Griffflächen am oberen Ende des Griffstückes aufgebracht. Damit wird die Hülse 2 weiter in das Griffstück 1 eingeschoben, wobei der Bund 18 aus der Ringnut 14 herausgleitet, indem er mit seiner balligen Aussenphase 19 die schräge Wand 15 der Ringnut 14 abläuft.

Gleichzeitig dringen die Keile 26 der Hülse 2 weiter in die Nuten 5 des Griffstückes 1 ein. Dabei gleiten die Stege 6 des Griffstückes 1 auf den Steigflächen 29 und auf die Zylinderfläche 30 auf, wodurch ein radial nach innen gerichteter Druck auf die Spannbacken 22.1 bis 22.3 ausgeübt wird. Dieser Druck bewirkt, dass das Innengewinde 32 in Eingriff mit dem Aussengewinde mit dem Schraubenbolzens kommt. Wird jetzt das gesamte Befestigungselement um die Längsachse A gedreht, kann das Innengewinde 32 an dem Aussengewinde des Schraubenbolzens ansteigen, sodass ein Druck durch den Konus 23 auf den festzulegenden Gegenstand ausgeübt und dieser festgelegt wird.

Bei der Demontage wird die Verbindung zunächst durch einige Drehungen des Befestigungselementes in entgegengesetzte Richtung gelöst. Danach wird das Griffstück soweit von der Hülse 2 abgezogen, bis die Hülse 2 in der Vormontageposition einrastet. Hierbei wird sich zu Nutze gemacht, dass der Bund 18 an der Phase 16 des Griffstückes 1 entlanggleiten kann, wobei die Spreizbacken 10.1 bis 10.4 geöffnet werden.

Der Bund 18 verbleibt allerdings in der Ringnut 14, da, wie oben besprochen, die Wand 20 an der senkrechten Wand 13 der Ringnut 14 anschlägt. Über diese Kontaktfläche kann unter normalen Umständen keine Radialkraft von der Hülse 2 auf das Griffstück 1 ausgeübt werden, um dieses erneut aufzuweiten.

In dieser Vormontagelage sind die Spannbacken 22.1 bis 22.3 wieder frei und können radial nach aussen schwingen. Jetzt können die Gewindeflanken des Innengewindes 32 der Hülse 2 auf den Gewindeflanken des Schraubengewindes der Schraube abgleiten. Das Befestigungselement kann so ohne Drehbewegung der Schraube abgenommen werden.

In vielen Fällen durchsetzt die Schraube eine Bohrung in einem Gegenstand, wobei die Bohrung einen grösseren Durchmesser aufweist als der Schraubenschaft mit dem Aussengewinde. In diesem Fall greift der Konus 23 beim Aufsetzen des Befestigungselementes auf den Schraubenschaft in die Bohrung ein und zentriert so die Schraube und das Befestigungselement. Gleichzeitig wird auch ein Zusammenpressen der Spannbacken 22.1 bis 22.3 unterstützt, da der Konus 23 in die Bohrung einfährt, bis das Befestigungselement mit dem Ringbund 25 an dem festzulegenden Gegenstand anliegt. Bei weiterem Verdrehen des Befestigungselementes wird über diesen Ringbund 25 eine Vorspannung auf den festzulegenden Gegenstand aufgebracht.

| **Positionszahlenliste** | | | | | |
|---|---|---|---|---|---|
| 1 | Griffstück | 34 | | 67 | |
| 2 | Hülse | 35 | | 68 | |
| 3 | Innenbohrung | 36 | | 69 | |
| 4 | Griffmulde | 37 | | 70 | |
| 5 | Nut | 38 | | 71 | |
| 6 | Stege | 39 | | 72 | |
| 7 | Innenfläche | 40 | | 73 | |
| 8 | Schräge | 41 | | 74 | |
| 9 | Schlitz | 42 | | 75 | |
| 10 | Spreizbacken | 43 | | 76 | |
| 11 | Ringkragen | 44 | | 77 | |
| 12 | Wand | 45 | | 78 | |
| 13 | Wand | 46 | | 79 | |
| 14 | Ringnut | 47 | | | |
| 15 | Wand | 48 | | A | Längsachse |
| 16 | Fase | 49 | | B | Hülsenachse |
| 17 | Schaft | 50 | | | |
| 18 | Bund | 51 | | | |
| 19 | Fase | 52 | | | |
| 20 | Ringwand | 53 | | | |
| 21 | Schlitz | 54 | | | |
| 22 | Spannbacken | 55 | | | |
| 23 | Konus | 56 | | | |
| 24 | Einstich | 57 | | | |
| 25 | Ringbund | 58 | | | |
| 26 | Keil | 59 | | | |
| 27 | Nut | 60 | | | |
| 28 | Abflachung | 61 | | | |
| 29 | Steigfläche | 62 | | | |
| 30 | Zylinderfläche | 63 | | | |
| 31 | Innenbohrung | 64 | | | |
| 32 | Innengewinde | 65 | | | |
| 33 | | 66 | | | |

## Patentansprüche

1. Befestigungselement zum Aufschrauben auf ein Gewinde mit einem Innengewinde (32), wobei der Durchmesser des Innengewindes (32) veränderbar und ein gewünschter Durchmesser festlegbar ist,
**dadurch gekennzeichnet,**
**dass** das Innengewinde (32) in eine Innenbohrung (31) einer Hülse (2) eingestochen ist und die Hülse (2) einen Schaft (17) aufweist, der mit zumindest einem Längsschlitz (21) versehen ist, wobei auf die Hülse (2) ein axial verschiebbares Griffstück (1) aufgesetzt und darauf axial bewegbar gehalten ist, welches eine Breite des Längsschlitzes (21) und damit den Durchmesser des Innengewindes (32) verringert.

2. Befestigungselement nach Anspruch 1, **dadurch gekennzeichnet, dass** auf den Schaft (17) der Hülse (2) zumindest ein teilweise parallel zu dem Längsschlitz (21) und axial verlaufender Keil (26) aufgesetzt ist, der in eine entsprechend geformte Nut (5) in eine Innenfläche (7) des Griffstückes (1) einfährt oder umgekehrt.

3. Befestigungselement nach Anspruch 2, **dadurch gekennzeichnet, dass** in der Nut (5) bzw. zwischen zwei Keilen (26) nach einer Steigfläche (29) eine Zylinderfläche (30) ausgebildet ist.

4. Befestigungselement nach Anspruch 2 oder 3, **dadurch gekennzeichnet, dass** der Keil (26) einerseits nahe einem Ende des Schaftes (17) an einem Ringbund (25) anschliesst und anderenends eine Abflachung (28) zum Schaft (17) hin aufweist.

5. Befestigungselement nach einem der Ansprüche 2 bis 4, **dadurch gekennzeichnet, dass** die Nut (5) im Innern des Griffstückes eine Schräge (8) zur Innenfläche (7) aufweist.

6. Befestigungselement nach Anspruch 4 oder 5, **dadurch gekennzeichnet, dass** an den Ringbund (25) ein Einstich (24) und dadurch ein sich verjüngender Konus (23) anschliesst.

7. Befestigungselement nach Anspruch 6, **dadurch gekennzeichnet, dass** dem Schaft (17) zumindest zwei, besser drei Schlitze (21) eingeformt sind, sodass der jeweilige Konus (23), Einstich (24) sowie die entsprechenden Keile (26) und Schafteile jeweils einen Spannbacken (22.1, 22.2, 22.3) ausbilden.

8. Befestigungselement nach Anspruch 7, dadruch gekennzeichnet, dass das Griffstück (1) hülsenförmig ausgebildet ist, mit einer Innenbohrung (3), in welche einends die Nuten (5) zur Aufnahme der Keile (26) eingeformt sind.

9. Befestigungselement nach Anspruch 8, **dadurch gekennzeichnet, dass** das Griffstück (1) nach den Nuten (5) zumindest einen sich zum anderen Ende hin erstreckenden Schlitz (9) aufweist, der in seiner Öffnungsweite veränderbar ist.

10. Befestigungselement nach Anspruch 9, **dadurch gekennzeichnet, dass** dieses andere Ende des Griffstückes (1) eine in die Innenbohrung (3) gerichtete Fase (16) aufweist.

11. Befestigungselement nach einem der Ansprüche 8 bis 10, **dadurch gekennzeichnet, dass** in die Innenbohrung (3) eine Ringnut (14) eingestochen ist.

12. Befestigungselement nach Anspruch 11, **dadurch gekennzeichnet, dass** die dem anderen Ende ferne Wand (13) der Ringnut (14) etwa senkrecht zur Innenbohrung (3) bzw. Achse (A) des Griffstückes (1) ausgebildet ist, während die gegenüberliegende dem anderen Ende nahe Wand (15) schräg in Richtung des anderen Endes hin verläuft.

13. Befestigungselement nach Anspruch 11 oder 12, **dadurch gekennzeichnet, dass** an die senkrecht zur Achse (A) des Griffstückes (1) verlaufende Wand (13) der Ringnut (14) ein Ringkragen (11) anschliesst, dessen andere Wand (12) wiederum in Richtung der Nuten (5) hin abgeschrägt ist.

14. Befestigungselement nach wenigstens einem der Ansprüche 9 bis 13, **dadurch gekennzeichnet, dass** der Hülse (2) ein Bund (18) angeformt ist.

15. Befestigungselement nach Anspruch 14, **dadurch gekennzeichnet, dass** der Bund (18) einerseits eine etwa senkrecht zur Hülsenachse (B) verlaufende Wand (20) und andererseits eine Aussenfase (19) besitzt.

16. Befestigungselement nach wenigstens einem der Ansprüche 9 bis 15, **dadurch gekennzeichnet, dass** das Griffstück (1) mindestens zwei, insbesondere vier Schlitze (9) aufweist.

## Claims

1. Securement element for screwing onto a thread, said element having an internal thread (32), the diameter of the internal thread (32) being variable, and a desired diameter being adjustable, **characterised in that** the internal thread (32) is inserted into an internal bore (31) of a sleeve (2), and the sleeve (2) has a shaft (17), which is provided with at least one longitudinal slot (21), an axially displaceable gripping piece (1) being mounted on the sleeve (2) and being retained thereon in an axially displaceable manner, which gripping piece reduces a width of the longitudinal slot (21) and, in consequence, the diameter of the internal thread (32).

2. Securement element according to claim 1, **characterised in that** at least one wedge (26) is mounted on the shaft (17) of the sleeve (2), which wedge extends partially parallel to the longitudinal slot (21) and axially and enters a correspondingly shaped groove (5) in an internal face (7) of the gripping piece (1), or vice versa.

3. Securement element according to claim 2, **characterised in that** a cylindrical face (30) is provided in the groove (5) or respectively between two wedges (26) after an ascending face (29).

4. Securement element according to claim 2 or 3, **characterised in that** the wedge (26) communicates on one side with an annular flange (25) in the vicinity of one end of the shaft (17) and has, at the other end, a flattened portion (28) extending towards the shaft (17).

5. Securement element according to one of claims 2 to 4, **characterised in that** the groove (5) has an inclination (8) relative to the internal face (7) in the interior of the gripping piece.

6. Securement element according to claim 4 or 5, **characterised in that** a recess (24) and, hence, a tapering cone (23) communicate with the annular flange (25).

7. Securement element according to claim 6, **characterised in that** at least two, even better three, slots (21) are provided in the shaft (17), so that the respective cone (23), the recess (24) as well as the corresponding wedges (26) and shaft parts each form a clamping jaw (22.1, 22.2, 22.3).

8. Securement element according to claim 7, **characterised in that** the gripping piece (1) is in the form of a sleeve, with an internal bore (3), in which the grooves (5) are provided at one end for accommodating the wedges (26).

9. Securement element according to claim 8, **characterised in that** the gripping piece (1) has, after the grooves (5), at least one slot (9) which extends to the other end and is variable in respect of its width of opening.

10. Securement element according to claim 9, **characterised in that** this other end of the gripping piece (1) has a chamfer (16) orientated into the internal bore (3).

11. Securement element according to one of claims 8 to 10, **characterised in that** an annular groove (14) is inserted in the internal bore (3).

12. Securement element according to claim 11, **characterised in that** the wall (13) of the annular groove (14), remote from the other end, is configured to be substantially perpendicular to the internal bore (3) or respectively the axis (A) of the gripping piece (1), while the oppositely situated wall (15), in the vicinity of the other end, extends inclinedly in the direction towards the other end.

13. Securement element according to claim 11 or 12, **characterised in that** an annular collar (11) communicates with the wall (13) of the annular groove (14), said wall extending perpendicular to the axis (A) of the gripping piece (1), and the other wall (12) of said annular collar is chamfered, in turn, in the direction towards the grooves (5).

14. Securement element according to at least one of claims 9 to 13, **characterised in that** a flange (18) is formed on the sleeve (2).

15. Securement element according to claim 14, **characterised in that** the flange (18) possesses on one side a wall (20), which extends substantially perpendicular to the sleeve axis (B) and, on the other side, an external chamfer (19).

16. Securement element according to at least one of claims 9 to 15, **characterised in that** the gripping piece (1) has at least two, more especially four, slots (9).

## Revendications

1. Elément de fixation destiné à être vissé sur une tige filetée, avec un filet intérieur (32), le diamètre du filet intérieur (32) étant variable et un diamètre souhaité pouvant être fixé,
**caractérisé par le fait que**
le filet intérieur (32) est introduit dans un alésage intérieur (31) d'une douille (2) et que la douille (2) présente une tige (17) pourvue d'au moins une fente longitudinale (21), sur la douille (2) étant placé un élément de poignée (1) déplaçable axialement et maintenue mobile axialement qui réduit une largeur de la fente longitudinale (21) et, de ce fait, le diamètre du filet intérieur (32).

2. Elément de fixation selon la revendication 1, **caractérisé par le fait que** sur la tige (17) de la douille (2) est placée au moins une clavette (26) s'étendant de manière partiellement parallèle à la fente longitudinale (21) et axiale qui s'engage dans une rainure (5) formée de manière correspondante dans une face intérieure (7) de l'élément de poignée (1), ou inversement.

3. Elément de fixation selon la revendication 2, **caractérisé par le fait que** dans la rainure (5) ou entre deux clavettes (26) après une face montante (29) est formée une face cylindrique (30).

4. Elément de fixation selon la revendication 2 ou 3, **caractérisé par le fait que** la clavette (26), d'une part, aboute, près d'une extrémité de la tige (17), à une collerette annulaire (25) et, d'autre part, présente un méplat (28) vers la tige (17).

5. Elément de fixation selon l'une des revendications 2 à 4, **caractérisé par le fait que** la rainure (5) à l'intérieur de l'élément de poignée présente un biseau (8) vers la face intérieure (7).

6. Elément de fixation selon la revendication 4 ou 5, **caractérisé par le fait que** la collerette annulaire (25) est suivie d'un collet (24) et, de ce fait, d'un cône (23) s'effilant.

7. Elément de fixation selon la revendication 6, **caractérisé par le fait que** dans la tige sont formées deux, mieux trois, fentes (21), de sorte que le cône (23), le collet (24) respectifs ainsi que les clavettes (26) et les éléments de tige correspondants constituent chaque fois une mâchoire de serrage (22.1, 22.2, 22.3).

8. Elément de fixation selon la revendication 7, **caractérisé par le fait que** l'élément de poignée (1) est réalisé sous forme de douille, avec un alésage intérieur (3) dans lequel sont formées, à une extrémité, les rainures (5) destinées à recevoir les clavettes (26).

9. Elément de fixation selon la revendication 8, **caractérisé par le fait que** l'élément de poignée (1) présente, après les rainures (5), au moins une fente s'étendant vers l'autre extrémité (9) qui est variable quant à sa largeur d'ouverture.

10. Elément de fixation selon la revendication 9, **caractérisé par le fait que** cette autre extrémité de l'élément de poignée (1) présente une phase (16) orientée vers l'alésage intérieur (3).

11. Elément de fixation selon l'une des revendications 8 à 10, **caractérisé par le fait que** dans l'alésage intérieur (3) est introduite une rainure annulaire (14).

12. Elément de fixation selon la revendication 11, **caractérisé par le fait que** la paroi (13) de la rainure annulaire (14) éloignée de l'autre extrémité est réalisée environ perpendiculaire à l'alésage intérieur (3) ou l'axe (A) de l'élément de poignée (1), tandis que la paroi opposée (15) rapprochée de l'autre extrémité s'étend obliquement en direction de l'autre extrémité.

13. Elément de fixation selon la revendication 11 ou 12, **caractérisé par le fait que** la paroi (13) de la rainure annulaire (14) s'étendant perpendiculaire à l'axe (A) de l'élément de poignée (1) est suivie d'un collier annulaire (11) dont l'autre paroi (12) est à nouveau biseautée en direction des rainures (5).

14. Elément de fixation selon au moins l'une des revendications 9 à 13, **caractérisé par le fait que** sur la douille (2) est formée une collerette (18).

15. Elément de fixation selon la revendication 14, **caractérisé par le fait que** la collerette (18) possède, d'une part, une paroi (20) s'étendant environ perpendiculairement à l'axe de la douille (B) et, d'autre part, une phase extérieure (19).

16. Elément de fixation selon au moins l'une des revendications 9 à 15, **caractérisé par le fait que** l'élément de poignée (1) présente au moins deux, en particulier quatre, fentes (9).
